(19) Europäisches Patentamt
European Patent Office
Office européen des brevets

(11) EP 4 632 008 A1

(12) **EUROPEAN PATENT APPLICATION**
published in accordance with Art. 153(4) EPC

(43) Date of publication:
**15.10.2025 Bulletin 2025/42**

(21) Application number: **23900468.2**

(22) Date of filing: **22.11.2023**

(51) International Patent Classification (IPC):
***C08L 71/12*** *(2006.01)* ***C08G 73/10*** *(2006.01)*
***C08L 79/08*** *(2006.01)*

(52) Cooperative Patent Classification (CPC):
**C08G 73/10; C08L 71/12; C08L 79/08**

(86) International application number:
**PCT/JP2023/042047**

(87) International publication number:
**WO 2024/122349 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.12.2022 JP 2022194175**

(71) Applicant: **MITSUBISHI GAS CHEMICAL COMPANY, INC.**
**Chiyoda-ku**
**Tokyo 100-8324 (JP)**

(72) Inventors:
- **SAKAI, Atsushi**
  **Hiratsuka-shi, Kanagawa 254-0016 (JP)**
- **FUJII, Ryosuke**
  **Hiratsuka-shi, Kanagawa 254-0016 (JP)**
- **SATO, Yuuki**
  **Hiratsuka-shi, Kanagawa 254-0016 (JP)**
- **FUKUSHIMA, Takuya**
  **Hiratsuka-shi, Kanagawa 254-0016 (JP)**

(74) Representative: **Vossius & Partner**
**Patentanwälte Rechtsanwälte mbB**
**Siebertstrasse 3**
**81675 München (DE)**

# (54) RESIN COMPOSITION AND MOLDED BODY

(57) A resin composition, and a molded article containing the resin composition. The resin composition contains a polyimide resin (A) containing a repeating structural unit represented by the following formula (1) and a repeating structural unit represented by the following formula (2), a content ratio of the repeating structural unit of formula (1) with respect to the total of the repeating structural unit of formula (1) and the repeating structural unit of formula (2) being 20 to 70 mol% and a component (B) consisting of a resin represented by a predetermined formula (5) or acid-modified product thereof, wherein a proportion [(B)/{(A)+(B)}] of a content by mass of the component (B) with respect to the total content by mass of the component (A) and the component (B) is more than 0.50,

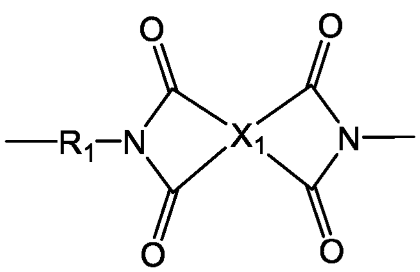
(1)

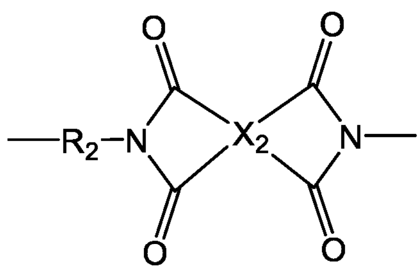
(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each

EP 4 632 008 A1

independently represent a tetravalent group having from 6 to 22 carbon atoms containing at least one aromatic ring.

## Description

### Technical Field

The present invention relates to a resin composition and a molded article.

### Background Art

A polyimide resin is a useful engineering plastic that has high thermal stability, high strength and high solvent resistance due to the stiffness, resonance stabilization and strong chemical bonds of the molecular chain thereof, and is being applied to a wide range of fields.

While a polyimide resin has high heat resistance, however, it has the problems of exhibiting no thermoplasticity and having low molding processability. However, a polyimide resin having thermoplasticity has been reported in recent years. Such a thermoplastic polyimide resin is excellent in molding processability in addition to the original heat resistance of the polyimide resin. The thermoplastic polyimide resin is therefore applicable to a molded article for use in an inhospitable environment to which nylon or polyester, a general purpose thermoplastic resin, is inapplicable.

One known molecular design method for imparting thermoplasticity to a polyimide resin is to incorporate a flexible structure, such as an aliphatic structure, into the main chain. While aliphatic structures have advantages in that they can impart thermoplasticity to a polyimide relatively easily and that they tend to exhibit low dielectric properties due to their bulk, they have inferior oxidation resistance compared to aromatic structures, and as a result reduce the high flame resistance that a polyimide originally has. Therefore, in order to apply such a thermoplastic polyimide resin to applications that require high flame resistance, studies have been carried out to improve flame resistance by adding a flame retardant.

For example, Patent Literature 1 discloses that a resin composition containing a polyimide resin having a specific structure and a phosphinic acid metal salt-based flame retardant has excellent molding processability, and can achieve both high flame resistance and good appearance.

Instead of using an additive such as a flame retardant, a method of modifying a resin by using two or more resin components is also known. For example, Patent Literature 2 discloses that a resin composition containing predetermined polyimide resin particles and at least one selected from the group consisting of a thermoplastic resin and a thermosetting resin can improve various properties, such as heat resistance and mechanical properties, while maintaining the lightness derived from the resin.

### Citation List

#### Patent Literature

PTL 1: WO 2019/220968
PTL 2: WO 2021/100716

### Summary of Invention

#### Technical Problem

The technology disclosed in Patent Literature 2 is a technology that improves heat resistance, mechanical properties, and the like by incorporating a polyimide resin into a thermoplastic resin or a thermosetting resin while maintaining the particle state of the polyimide resin without thermally melting, but does not improve the flame resistance of the resin composition.

An object of the present invention is to provide a resin composition and a molded article that can exhibit high flame resistance even when a flame retardant is used in a small amount or is not used.

#### Solution to Problem

The present inventors have found that the aforementioned object can be attained by a resin composition containing a polyimide resin that combines specific different polyimide structural units in a specific ratio and an aromatic resin having a specific structure in a predetermined ratio.

That is, the present invention relates to the following.

[1] A resin composition containing a polyimide resin (A) containing a repeating structural unit represented by the following formula (1) and a repeating structural unit represented by the following formula (2), a content ratio of the repeating structural unit of formula (1) with respect to the total of the repeating structural unit of formula (1) and the repeating structural unit of formula (2) being 20 to 70 mol% and a component (B) consisting of a resin represented by the following formula (5) or acid-modified product thereof, wherein
a proportion [(B)/{(A)+(B)}] of a content by mass of the component (B) with respect to the total content by mass of the component (A) and the component (B) is more than 0.50,

[Formula 1]

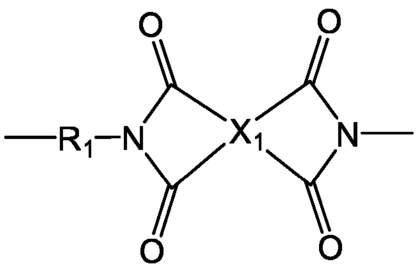

(1)

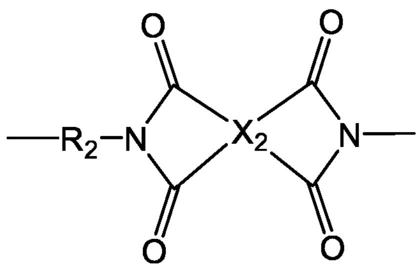

(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.

[Formula 2]

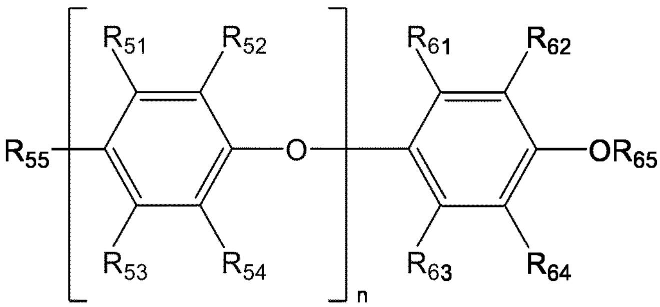

(5)

wherein $R_{51}$ to $R_{55}$ and $R_{61}$ to $R_{64}$ each independently represent a hydrogen atom, a hydroxy group, or an alkyl group having from 1 to 4 carbon atoms, and $R_{65}$ represents a hydrogen atom or an alkyl group having from 1 to 4 carbon atoms; and n denotes the number of repeating structural units, and is a number of 10 or more.
[2] The resin composition according to the above [1], wherein a total content of the component (A) and the component (B) in the resin composition is 50% by mass or more.
[3] The resin composition according to the above [1] or [2], wherein the component (B) has an intrinsic viscosity of 0.20 to 0.60 dL/g at 30°C measured in chloroform.
[4] The resin composition according to any one of the above [1] to [3], wherein the resin composition is obtained by melt-kneading at a temperature exceeding the melting point of the component (A).
[5] The resin composition according to any one of the above [1] to [4], wherein a pellet composed of the resin composition has a microphase-separated structure.
[6] A molded article containing the resin composition according to any one of the above [1] to [5].
[7] The molded article according to the above [6], wherein the molded article is an injection-molded article.
[8] The molded article according to the above [6] or [7], wherein the molded article having a thickness of 4 mm has an oxygen index measured in accordance with JIS K 7201:1995 of 28 or more.

Advantageous Effects of Invention

The present invention can provide a resin composition and a molded article that can exhibit high flame resistance even when a flame retardant is used in a small amount or is not used.

Brief Description of Drawings

[Fig. 1] Fig. 1 is a schematic diagram showing a production method of a sample (ultra-thin piece) used in observation by a field-emission scanning transmission electron microscope (FE-STEM).

[Fig. 2] Fig. 2 is a micrograph of a cross-section of the resin composition (pellets) of Example 1, cut in a direction perpendicular to the machine direction (MD), observed by FE-STEM.

[Fig. 3] Fig. 3 is a schematic diagram for illustrating a method for producing a test piece used for evaluating adhesion between a film and a copper foil.

[Fig. 4] Fig. 4 is a schematic diagram for illustrating a method for evaluating the adhesion between the film and the copper foil and tensile adhesive strength.

Description of Embodiments

[Resin composition]

The resin composition of the present invention contains a polyimide resin (A) containing a repeating structural unit represented by the following formula (1) and a repeating structural unit represented by the following formula (2), a content ratio of the repeating structural unit of formula (1) with respect to the total of the repeating structural unit of formula (1) and the repeating structural unit of formula (2) being 20 to 70 mol% and a component (B) consisting of a resin represented by the following formula (5) or acid-modified product thereof, wherein a proportion [(B)/{(A)+(B)}] of a content by mass of the component (B) with respect to the total content by mass of the component (A) and the component (B) is more than 0.50,

[Formula 3]

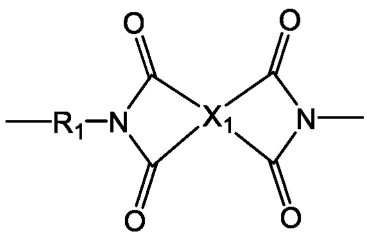

(1)

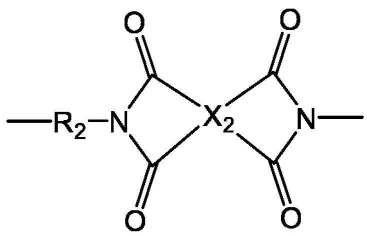

(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.

[Formula 4]

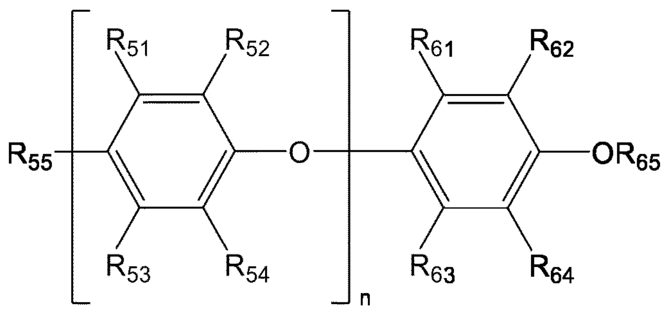

(5)

wherein $R_{51}$ to $R_{55}$ and $R_{61}$ to $R_{64}$ each independently represent a hydrogen atom, a hydroxy group, or an alkyl group having from 1 to 4 carbon atoms, and $R_{65}$ represents a hydrogen atom or an alkyl group having from 1 to 4 carbon atoms; and n denotes the number of repeating structural units, and is a number of 10 or more.

The resin composition of the present invention can exhibit high flame resistance even when a flame retardant is

used in a small amount or is not used as a result of containing a polyimide resin (A) formed by combining specific different polyimide constitutional units in the above-described specific ratio, and a component (B) consisting of a resin represented by the above formula (5) or acid-modified product thereof in a predetermined proportion.

Although the reason why the above effects are obtained in the present invention is not entirely clear, it is thought to be as follows.

In the resin composition of the present invention, the mass ratio [(B)/{(A)+(B)}] is more than 0.50 and the content ratio of aromatic rings is high. Therefore, for example, it is thought that when a molded article composed of the resin composition is subjected to a combustion test, char (residual carbon) formation is promoted on the surface of the molded article, and so the molded article does not easily burn. In addition, as described below, the component (A) and the component (B) are thought to form a microphase-separated structure in the resin composition or molded article, and it is thought that at the phase-separated interface between the component (A) and the component (B), the aromatic ring in the component (A) and the aromatic structure in the component (B) partially form a chargetransfer complex, and are thermally stabilized.

Further, by containing the component (A) and the component (B), the resin composition of the present invention can achieve an extremely low dielectric constant and dissipation factor (hereinafter, these are also collectively referred to as "low dielectric properties") for a resin material, and also has good adhesion to metal foils such as a copper foil.

<Polyimide resin (A)>

The polyimide resin (A) used in the present invention contains a repeating structural unit represented by the following formula (1) and a repeating structural unit represented by the following formula (2), and a content ratio of the repeating structural unit of formula (1) with respect to the total of the repeating structural unit of formula (1) and the repeating structural unit of formula (2) is 20 to 70 mol%.

[Formula 5]

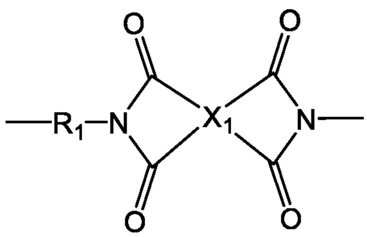

(1)

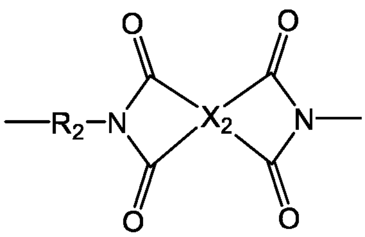

(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.

The polyimide resin (A) used in the present invention is a thermoplastic resin, which is preferably in a powder or pellet form. The thermoplastic polyimide resin is distinguished from, for example, polyimide resins formed by closing the imide ring after molding in a state of a polyimide precursor such as a polyamic acid and having no glass transition temperature (Tg), or polyimide resins that decompose at a temperature lower than the glass transition temperature.

The repeating structural unit of formula (1) will be described in detail below.

$R_1$ represents a divalent group having from 6 to 22 carbon atoms containing at least one alicyclic hydrocarbon structure. The alicyclic hydrocarbon structure herein means a ring derived from an alicyclic hydrocarbon compound, and the alicyclic hydrocarbon compound may be either saturated or unsaturated and may be either monocyclic or polycyclic.

Examples of the alicyclic hydrocarbon structure include a cycloalkane ring, such as a cyclohexane ring, a cycloalkene ring, such as cyclohexene, a bicycloalkane ring, such as a norbornane ring, and a bicycloalkene ring, such as norbornene, but the alicyclic hydrocarbon structure is not limited thereto. Among these, a cycloalkane ring is preferred, a cycloalkane ring having from 4 to 7 carbon atoms is more preferred, and a cyclohexane ring is further preferred.

$R_1$ has from 6 to 22 carbon atoms, and preferably from 8 to 17 carbon atoms.

$R_1$ contains at least one alicyclic hydrocarbon structure, and preferably from 1 to 3 alicyclic hydrocarbon structures.

$R_1$ is preferably a divalent group represented by the following formula (R1-1) or (R1-2):

[Formula 6]

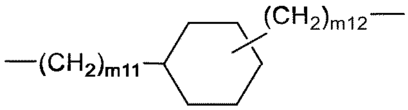

(R1-1)

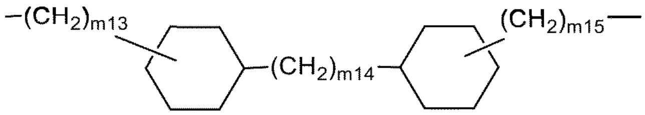

(R1-2)

wherein $m_{11}$ and $m_{12}$ each independently represent an integer of 0-2, and preferably 0 or 1; and $m_{13}$ to $m_{15}$ each independently represent an integer of 0-2, and preferably 0 or 1.

$R_1$ is particularly preferably a divalent group represented by the following formula (R1-3):

[Formula 7]

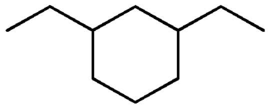

(R1-3)

In the divalent group represented by the formula (R1-3), the conformation of the two methylene groups with respect to the cyclohexane ring may be either cis or trans, and the ratio of cis and trans may be an arbitrary value.

$X_1$ is a tetravalent group having from 6 to 22 carbon atoms containing at least one aromatic ring. The aromatic ring may be either a monocyclic ring or a condensed ring, and examples thereof include a benzene ring, a naphthalene ring, an anthracene ring and a tetracene ring, but the aromatic ring is not limited thereto. Among these, a benzene ring and a naphthalene ring are preferred, and a benzene ring is more preferred.

$X_1$ has from 6 to 22 carbon atoms, and preferably has from 6 to 18 carbon atoms.

$X_1$ contains at least one aromatic ring, and preferably contains from 1 to 3 aromatic rings.

$X_1$ is preferably a tetravalent group represented by one of the following formulae (X-1) to (X-4):

[Formula 8]

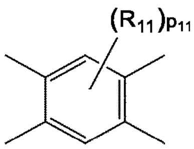

(X-1)

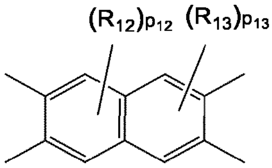

(X-2)

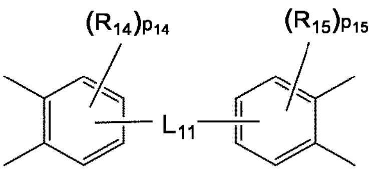

(X-3)

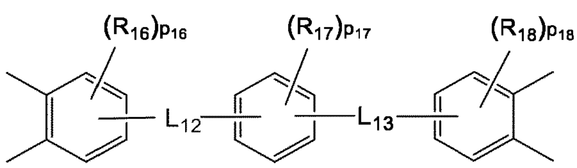

(X-4)

wherein $R_{11}$ to $R_{18}$ each independently represent an alkyl group having from 1 to 4 carbon atoms; $p_{11}$ to $p_{13}$ each independently represent an integer of 0-2, and preferably 0; $p_{14}$, $p_{15}$, $p_{16}$ and $p_{18}$ each independently represent an integer of 0-3, and preferably 0; $p_{17}$ represents an integer of 0-4, and preferably 0; and $L_{11}$ to $L_{13}$ each independently represent a single bond, an ether group, a carbonyl group or an alkylene group having from 1 to 4 carbon atoms.

$X_1$ is a tetravalent group having from 6 to 22 carbon atoms containing at least one aromatic ring, and therefore $R_{12}$, $R_{13}$, $p_{12}$ and $p_{13}$ in the formula (X-2) are selected in such a manner that the tetravalent group represented by the

formula (X-2) has from 10 to 22 carbon atoms.

Similarly, $L_{11}$, $R_{14}$, $R_{15}$, $p_{14}$ and $_{P15}$ in the formula (X-3) are selected in such a manner that the tetravalent group represented by the formula (X-3) has from 12 to 22 carbon atoms, and $L_{12}$, $L_{13}$, $R_{16}$, $R_{17}$, $R_{18}$, $P_{16}$, $p_{17}$ and $p_{18}$ in the formula (X-4) are selected in such a manner that the tetravalent group represented by the formula (X-4) has from 18 to 22 carbon atoms.

$X_1$ is particularly preferably a tetravalent group represented by the following formula (X-5) or (X-6):

[Formula 9]

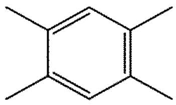

(X-5)

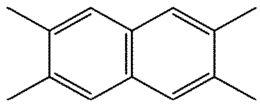

(X-6)

Next, the repeating structural unit of formula (2) will be described in detail below.

$R_2$ represents a divalent chain aliphatic group having from 5 to 16 carbon atoms, preferably from 6 to 14 carbon atoms, more preferably from 7 to 12 carbon atoms, and further preferably from 8 to 10 carbon atoms. As used herein, "chain aliphatic group" means a group derived from a chain aliphatic compound, and the chain aliphatic compound may be either saturated or unsaturated, may be in the form of either linear or branched chain, and may contain a hetero atom, such as an oxygen atom.

$R_2$ is preferably an alkylene group having from 5 to 16 carbon atoms, more preferably an alkylene group having from 6 to 14 carbon atoms, further preferably an alkylene group having from 7 to 12 carbon atoms, and particularly preferably an alkylene group having from 8 to 10 carbon atoms. The alkylene group may be either a linear alkylene group or a branched alkylene group, and is preferably a linear alkylene group.

$R_2$ preferably represents at least one selected from the group consisting of an octamethylene group and a decamethylene group, and particularly preferably represents an octamethylene group.

Another preferred embodiment of $R_2$ is a divalent chain aliphatic group having from 5 to 16 carbon atoms containing an ether group. The divalent chain aliphatic group preferably has from 6 to 14 carbon atoms, more preferably from 7 to 12 carbon atoms, and further preferably from 8 to 10 carbon atoms. Preferred examples of the group include a divalent group represented by the following formula (R2-1) or (R2-2):

[Formula 10]

$$-(CH_2)_{m21}-O-(CH_2)_{m22}- \qquad (R2-1)$$

$$-(CH_2)_{m23}-O-(CH2)_{m24}-O-(CH_2)_{m25}- \qquad (R2-2)$$

wherein $m_{21}$ and $m_{22}$ each independently represent an integer of 1-15, preferably 1-13, more preferably 1-11, and further preferably 1-9; and $m_{23}$ to $m_{25}$ each independently represent an integer of 1-14, preferably 1-12, more preferably 1-10, and further preferably 1-8.

$R_2$ represents a divalent chain aliphatic group having from 5 to 16 carbon atoms (preferably from 6 to 14 carbon atoms, more preferably from 7 to 12 carbon atoms, and further preferably from 8 to 10 carbon atoms), and therefore $m_{21}$ and $m_{22}$ in the formula (R2-1) are selected so that the divalent group represented by the formula (R2-1) has from 5 to 16 carbon atoms (preferably from 6 to 14 carbon atoms, more preferably from 7 to 12 carbon atoms, and further preferably from 8 to 10 carbon atoms), i.e., $m_{21} + m_{22}$ is from 5 to 16 (preferably 6 to 14, more preferably 7 to 12, and further preferably 8 to 10).

Similarly, $m_{23}$ to $m_{25}$ in the formula (R2-2) are selected so that the divalent group represented by the formula (R2-2) has from 5 to 16 carbon atoms (preferably from 6 to 14 carbon atoms, more preferably from 7 to 12 carbon atoms, and further preferably from 8 to 10 carbon atoms), i.e., $m_{23} + m_{24} + m_{25}$ is from 5 to 16 (preferably from 6 to 14 carbon atoms, more preferably from 7 to 12 carbon atoms, and further preferably from 8 to 10 carbon atoms).

$X_2$ is defined similarly to $X_1$ in the formula (1), and preferred embodiments thereof are also the same.

The content ratio of the repeating structural unit of formula (1) with respect to the total of the repeating structural unit of formula (1) and the repeating structural unit of formula (2) is 20 to 70 mol%. When the content ratio of the repeating structural unit of formula (1) is within the above range, the polyimide resin can be sufficiently crystallized even in a general injection molding cycle. If the content ratio is less than 20 mol%, molding processability decreases, and if the content ratio exceeds 70 mol%, crystallinity decreases, resulting in a decrease in heat resistance.

The content ratio of the repeating structural unit of formula (1) with respect to the total of the repeating structural

unit of formula (1) and the repeating structural unit of formula (2) is, from the viewpoint of expressing high crystallinity, preferably 65 mol% or less, more preferably 60 mol% or less, and further preferably 50 mol% or less.

Among the above-described range, the content ratio of the repeating structural unit of formula (1) with respect to the total of the repeating structural unit of formula (1) and the repeating structural unit of formula (2) is preferably 20 mol% or more and less than 40 mol%. Within this range, a resin composition having higher crystallinity of the polyimide resin (A) and better heat resistance can be obtained.

From the viewpoint of molding processability, the content ratio is preferably 25 mol% or more, more preferably 30 mol% or more, and further preferably 32 mol% or more, and from the viewpoint of expressing high crystallinity, still further preferably 35 mol% or less.

The content ratio of the total of the repeating structural unit of the formula (1) and the repeating structural unit of the formula (2) with respect to the total repeating structural units constituting the polyimide resin (A) is preferably 50 to 100 mol%, more preferably 75 to 100 mol%, further preferably 80 to 100 mol%, and still further preferably 85 to 100 mol%.

The polyimide resin (A) may further contain a repeating structural unit represented by the following formula (3). In this case, the content ratio of the repeating structural unit of formula (3) with respect to the total of the repeating structural unit of formula (1) and the repeating structural unit of formula (2) is preferably 25 mol% or less. On the other hand, the lower limit is not particularly limited as long as the content ratio exceeds 0 mol%.

From the viewpoint of improving heat resistance, the content ratio is preferably 5 mol% or more, and more preferably 10 mol% or more, while from the viewpoint of maintaining crystallinity, the content ratio is preferably 20 mol% or less, and more preferably 15 mol% or less.

[Formula 11]

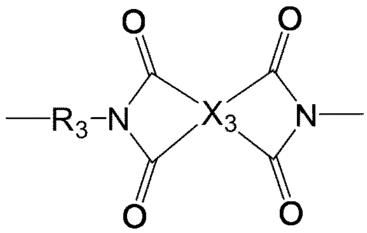

(3)

wherein $R_3$ represents a divalent group having from 6 to 22 carbon atoms containing at least one aromatic ring; and $X_3$ represents a tetravalent group having from 6 to 22 carbon atoms containing at least one aromatic ring.

$R_3$ is a divalent group having from 6 to 22 carbon atoms containing at least one aromatic ring. The aromatic ring may be either a monocyclic ring or a condensed ring, and examples thereof include a benzene ring, a naphthalene ring, an anthracene ring and a tetracene ring, but the aromatic ring is not limited thereto. Among these, a benzene ring and a naphthalene ring are preferred, and a benzene ring is more preferred.

$R_3$ has from 6 to 22 carbon atoms, and preferably has from 6 to 18 carbon atoms.

$R_3$ contains at least one aromatic ring, and preferably contains from 1 to 3 aromatic rings.

The aromatic ring may also be bonded to a monovalent or divalent electron-withdrawing group. Examples of the monovalent electron-withdrawing group include a nitro group, a cyano group, a p-toluenesulfonyl group, halogen, an alkyl halide group, a phenyl group, and an acyl group. Examples of the divalent electron-withdrawing group include alkylene halide groups such as alkylene fluoride groups (e.g., $-C(CF_3)_2-$ and $-(CF_2)_p-$(wherein p is an integer of 1-10)), as well as -CO-, $-SO_2-$, -SO-, -CONH-, and -COO-.

$R_3$ is preferably a divalent group represented by the following formula (R3-1) or (R3-2):

[Formula 12]

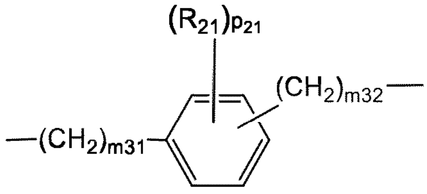

(R3-1)

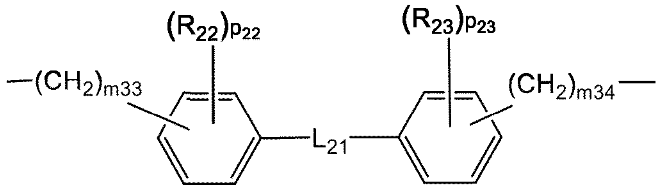

(R3-2)

wherein $m_{31}$ and $m_{32}$ each independently represent an integer of 0-2, and preferably 0 or 1; $m_{33}$ and $m_{34}$ each independently represent an integer of 0-2, and preferably 0 or 1; $R_{21}$, $R_{22}$ and $R_{23}$ each independently represent an alkyl group having from 1 to 4 carbon atoms, an alkenyl group having from 2 to 4 carbon atoms or an alkynyl group having from 2 to 4 carbon atoms; $p_{21}$, $p_{22}$ and $p_{23}$ each represent an integer of 0-4, and preferably 0; and $L_{21}$ represents a single bond, an ether group, a carbonyl group or an alkylene group having from 1 to 4 carbon atoms.

$R_3$ is a divalent group having from 6 to 22 carbon atoms containing at least one aromatic ring, and therefore $m_{31}$, $m_{32}$, $R_{21}$ and $p_{21}$ in the formula (R3-1) are selected in such a manner that the divalent group represented by the formula (R3-1) has from 6 to 22 carbon atoms.

Similarly, $L_{21}$, $m_{33}$, $m_{34}$, $R_{22}$, $R_{23}$, $p_{22}$ and $p_{23}$ in the formula (R3-2) are selected in such a manner that the divalent group represented by the formula (R3-2) has from 12 to 22 carbon atoms.

$X_3$ is defined similarly to $X_1$ in the formula (1), and preferred embodiments thereof are also the same.

The polyimide resin (A) may further contain a repeating structural unit represented by the following formula (4):

[Formula 13]

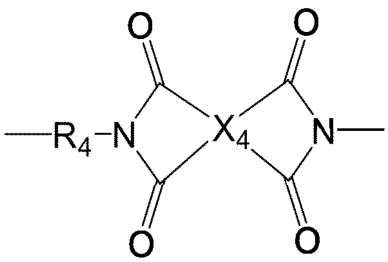

(4)

wherein $R_4$ represents a divalent group containing $-SO_2-$ or $-Si(R_x)(R_y)O-$; $R_x$ and $R_y$ each independently represent a chain aliphatic group having from 1 to 3 carbon atoms, or a phenyl group; and $X_4$ represents a tetravalent group having from 6 to 22 carbon atoms containing at least one aromatic ring.

$X_4$ is defined similarly to $X_1$ in the formula (1), and preferred embodiments thereof are also the same.

The end structure of the polyimide resin (A) is not particularly limited, but the polyimide resin (A) preferably has a chain aliphatic group having from 5 to 14 carbon atoms at the end thereof.

The chain aliphatic group may be either saturated or unsaturated, and may be in the form of either linear or branched chain. When the polyimide resin (A) contains the above particular group at the end thereof, it is possible to obtain a resin composition excellent in heat aging resistance.

Example of the saturated chain aliphatic group having from 5 to 14 carbon atoms include an n-pentyl group, an n-hexyl group, an n-heptyl group, an n-octyl group, an n-nonyl group, an n-decyl group, an n-undecyl group, a lauryl group, an n-tridecyl group, an n-tetradecyl group, an isopentyl group, a neopentyl group, a 2-methylpentyl group, a 2-methylhexyl group, a 2-ethylpentyl group, a 3-ethylpentyl group, an isooctyl group, a 2-ethylhexyl group, a 3-ethylhexyl group, an isononyl group, a 2-ethyloctyl group, an isodecyl group, an isododecyl group, an isotridecyl group and an isotetradecyl group.

Example of the unsaturated chain aliphatic group having from 5 to 14 carbon atoms include a 1-pentenyl group, a 2-pentenyl group, a 1-hexenyl group, a 2-hexenyl group, a 1-heptenyl group, a 2-heptenyl group, a 1-octenyl group, a 2-octenyl group, a nonenyl group, a decenyl group, a dodecenyl group, a tridecenyl group and a tetradecenyl group.

Among these, the chain aliphatic group is preferably a saturated chain aliphatic group, and more preferably a

saturated linear aliphatic group. The chain aliphatic group preferably has 6 or more carbon atoms, more preferably 7 or more carbon atoms and further preferably 8 or more carbon atoms, and preferably has 12 or less carbon atoms, more preferably 10 or less carbon atoms and further preferably 9 or less carbon atoms from the viewpoint of achievement of heat aging resistance. The chain aliphatic group may be adopted singly or in combinations of two or more.

The chain aliphatic group is particularly preferably at least one selected from the group consisting of an n-octyl group, an isooctyl group, a 2-ethylhexyl group, an n-nonyl group, an isononyl group, an n-decyl group and an isodecyl group, further preferably at least one selected from the group consisting of an n-octyl group, an isooctyl group, a 2-ethylhexyl group, an n-nonyl group, and an isononyl group, and most preferably at least one selected from the group consisting of an n-octyl group, an isooctyl group, and a 2-ethylhexyl group.

The polyimide resin (A) preferably contains only a chain aliphatic group having from 5 to 14 carbon atoms, besides a terminal amino group and a terminal carboxy group, at the end thereof from the viewpoint of heat aging resistance. When a group, besides the above groups, is contained at the end, the content thereof with respect to the chain aliphatic group having from 5 to 14 carbon atoms is preferably 10 mol% or less and more preferably 5 mol% or less.

The content of the chain aliphatic group having from 5 to 14 carbon atoms in the polyimide resin (A) is preferably 0.01 mol% or more, more preferably 0.1 mol% or more, and further preferably 0.2 mol% or more based on the total 100 mol% of the total repeating structural units constituting the polyimide resin (A) from the viewpoint of exerting excellent heat aging resistance. Further, to ensure a sufficient molecular weight and obtain good mechanical properties, the content of the chain aliphatic group having from 5 to 14 carbon atoms in the polyimide resin (A) is, with respect to a total of 100 mol% of all the repeating structural units constituting the polyimide resin (A), preferably 10 mol% or less, more preferably 6 mol% or less, and further preferably 3.5 mol% or less.

The content of the chain aliphatic group having from 5 to 14 carbon atoms in the polyimide resin (A) can be determined by depolymerization of the polyimide resin (A).

The polyimide resin (A) preferably has a melting point of 360°C or lower and a glass transition temperature of 150°C or higher. The melting point of the polyimide resin (A) is more preferably 280°C or higher, and further preferably 290°C or higher from the viewpoint of heat resistance, and preferably 345°C or lower, more preferably 340°C or lower, and further preferably 335°C or lower from the viewpoint of exerting high molding processability. In addition, the glass transition temperature of the polyimide resin (A) is more preferably 160°C or higher and more preferably 170°C or higher from the viewpoint of heat resistance, and is preferably 250°C or lower, more preferably 230°C or lower, and further preferably 200°C or lower from the viewpoint of exerting high molding processability.

The melting point and the glass transition temperature of the polyimide resin (A) can both be measured using a differential scanning calorimeter.

In addition, from the viewpoint of improving crystallinity, heat resistance, mechanical strength, and chemical resistance, the exothermic amount of the crystallization exothermic peak of the polyimide resin (A) observed when the polyimide resin is melted and then cooled at a cooling rate of 20°C/min as measured by a differential scanning calorimeter (hereinafter, this exothermic amount is also simply referred to as "heat of crystallization") is preferably 5.0 mJ/mg or more, more preferably 10.0 mJ/mg or more, and further preferably 17.0 mJ/mg or more. The upper limit of the heat of crystallization is not particularly limited, but is usually 45.0 mJ/mg or less.

The melting point, glass transition temperature, and heat of crystallization of the polyimide resin (A) can be specifically measured by the methods described in the Examples.

The logarithmic viscosity of the polyimide resin (A) at 30°C in a 0.5 % by mass concentrated sulfuric acid solution is preferably in the range of 0.2 to 2.0 dL/g, and more preferably 0.3 to 1.8 dL/g. When the logarithmic viscosity is 0.2 dL/g or more, sufficient mechanical strength can be obtained when the obtained resin composition is formed into a molded article, and when the logarithmic viscosity is 2.0 dL/g or less, molding processability and handleability are good. The logarithmic viscosity $\mu$ is obtained according to the following expression by measuring the elapsed times for flowing concentrated sulfuric acid and the polyimide resin solution at 30°C with a Cannon-Fenske viscometer.

$$\mu = \ln(ts/t_0)/C$$

$t_0$: elapsed time for flowing concentrated sulfuric acid
ts: elapsed time for flowing polyimide resin solution
C: 0.5 (g/dL)

The weight average molecular weight Mw of the polyimide resin (A) is preferably in the range of 10,000 to 150,000, more preferably 15,000 to 100,000, further preferably 20,000 to 80,000, still further preferably 30,000 to 70,000, and still further preferably 35,000 to 65,000. When the weight average molecular weight Mw of the polyimide resin (A) is 10,000 or more, the mechanical strength of the obtained molded article is good, and when Mw is 40,000 or more, the stability of the mechanical strength is good, and when Mw is 150,000 or less, molding processability is good.

The weight average molecular weight Mw of the polyimide resin (A) can be measured by gel permeation chromatography (GPC) method using polymethyl methacrylate (PMMA) as a standard sample.

(Method for producing polyimide resin (A))

The polyimide resin (A) may be produced by reacting a tetracarboxylic acid component and a diamine component. The tetracarboxylic acid component contains a tetracarboxylic acid containing at least one aromatic ring and/or a derivative thereof, and the diamine component contains a diamine containing at least one alicyclic hydrocarbon structure and a chain aliphatic diamine.

The tetracarboxylic acid containing at least one aromatic ring is preferably a compound having four carboxy groups that are bonded directly to the aromatic ring, and may contain an alkyl group in the structure thereof. The tetracarboxylic acid preferably has from 6 to 26 carbon atoms. Preferred examples of the tetracarboxylic acid include pyromellitic acid, 2,3,5,6-toluenetetracarboxylic acid, 3,3',4,4'-benzophenonetetracarboxylic acid, 3,3',4,4'-biphenyltetracarboxylic acid and 1,4,5,8-naphthalenetetracarboxylic acid. Among these, pyromellitic acid is more preferred.

Examples of the derivative of the tetracarboxylic acid containing at least one aromatic ring include an anhydride and an alkyl ester compound of a tetracarboxylic acid containing at least one aromatic ring. The derivative of the tetracarboxylic acid preferably has from 6 to 38 carbon atoms. Examples of the anhydride of the tetracarboxylic acid include pyromellitic monoanhydride, pyromellitic dianhydride, 2,3,5,6-toluenetetracarboxylic dianhydride, 3,3',4,4'-diphenylsulfonetetracarboxylic dianhydride, 3,3',4,4'-benzophenonetetracarboxylic dianhydride, 3,3',4,4'-biphenyltetracarboxylic dianhydride and 1,4,5,8-naphthalenetetracarboxylic dianhydride. Examples of the alkyl ester compound of the tetracarboxylic acid include dimethyl pyromellitate, diethyl pyromellitate, dipropyl pyromellitate, diisopropyl pyromellitate, dimethyl 2,3,5,6-toluenetetracarboxylate, dimethyl 3,3',4,4'-diphenylsulfonetetracarboxylate, dimethyl 3,3',4,4'-benzophenonetetracarboxylate, dimethyl 3,3',4,4'-biphenyltetracarboxylate and dimethyl 1,4,5,8-naphthalenetetracarboxylate. The alkyl group in the alkyl ester compound of the tetracarboxylic acid preferably has from 1 to 3 carbon atoms.

The tetracarboxylic acid containing at least one aromatic ring and/or the derivative thereof may be used as a sole compound selected from the aforementioned compounds or may be used as a combination of two or more compounds.

The diamine containing at least one alicyclic hydrocarbon structure preferably has from 6 to 22 carbon atoms, and preferred examples thereof include 1,2-bis(aminomethyl)cyclohexane, 1,3-bis(aminomethyl)cyclohexane, 1,4-bis(aminomethyl)cyclohexane, 1,2-cyclohexanediamine, 1,3-cyclohexanediamine, 1,4-cyclohexanediamine, 4,4'-diaminodicyclohexylmethane, 4,4'-methylenebis(2-methylcyclohexylamine), carvone diamine, limonene diamine, isophorone diamine, norbornane diamine, bis(aminomethyl)tricyclo[5.2.1.0$^{2,6}$]decane, 3,3'-dimethyl-4,4'-diaminodicyclohexylmethane and 4,4'-diaminodicyclohexylpropane. These compounds may be used solely or may be used as a combination of two or more compounds selected therefrom. Among these, 1,3-bis(aminomethyl)cyclohexane is preferably used. A diamine containing an alicyclic hydrocarbon structure generally has conformational isomers, and the ratio of the cis isomer and the trans isomer is not particularly limited.

The chain aliphatic diamine may be in the form of either linear or branched chain, and has preferably from 5 to 16 carbon atoms, more preferably from 6 to 14 carbon atoms and further preferably from 7 to 12 carbon atoms. The linear moiety having from 5 to 16 carbon atoms may contain an ether bond in the course thereof. Preferred examples of the chain aliphatic diamine include 1,5-pentamethylenediamine, 2-methylpentane-1,5-diamine, 3-methylpentane-1,5-diamine, 1,6-hexamethylenediamine, 1,7-heptamethylenediamine, 1,8-octamethylenediamine, 1,9-nonamethylenediamine, 1,10-decamethylenediamine, 1,11-undecamethylenediamine, 1,12-dodecamethylenediamine, 1,13-tridecamethylenediamine, 1,14-tetradecamethylenediamine, 1,16-hexadecamethylenediamine, and 2,2'-(ethylenedioxy)bis(ethyleneamine).

The chain aliphatic diamine may be used as a sole compound or as a mixture of plural kinds thereof. Among these, a chain aliphatic diamine having from 8 to 10 carbon atoms can be preferably used, and at least one selected from the group consisting of 1,8-octamethylenediamine and 1,10-decamethylenediamine can be particularly preferably used.

In the production of the polyimide resin (A), the molar ratio of the charged amount of the diamine containing at least one alicyclic hydrocarbon structure with respect to the total amount of the diamine containing at least one alicyclic hydrocarbon structure and the chain aliphatic diamine is preferably 20 to 70 mol%. The molar ratio is preferably 25 mol% or more, more preferably 30 mol% or more, and further preferably 32 mol% or more, and is preferably 60 mol% or less, more preferably 50 mol% or less, further preferably less than 40 mol%, and further preferably 35 mol% or less from the viewpoint of exerting high crystallinity.

The diamine component may contain a diamine containing at least one aromatic ring. The diamine containing at least one aromatic ring preferably has from 6 to 22 carbon atoms, and examples thereof include o-xylylenediamine, m-xylylenediamine, p-xylylenediamine, 1,2-diethynylbenzenediamine, 1,3-diethynylbenzenediamine, 1,4-diethynylbenzenediamine, 1,2-diaminobenzene, 1,3-diaminobenzene, 1,4-diaminobenzene, 4,4'-diaminodiphenyl ether, 3,4'-diaminodiphenyl ether, 4,4'-diaminodiphenylmethane, $\alpha,\alpha'$-bis(4-aminophenyl)-1,4-diisopropylbenzene, $\alpha,\alpha'$-bis(3-aminophenyl)-1,4-diisopropylbenzene, 2,2-bis(4-(4-aminophenoxy)phenyl)propane, 2,6-diaminonaphthalene and 1,5-diaminonaphthalene.

The molar ratio of the charged amount of the diamine containing at least one aromatic ring with respect to the total amount of the diamine containing at least one alicyclic hydrocarbon structure and the chain aliphatic diamine is preferably 25 mol% or less. On the other hand, the lower limit is not particularly limited as long as the molar ratio exceeds 0 mol%.

From the viewpoint of improving heat resistance, the molar ratio is preferably 5 mol% or more, and more preferably 10 mol% or more, while from the viewpoint of maintaining crystallinity, the molar ratio is preferably 20 mol% or less, and more preferably 15 mol% or less.

In addition, the molar ratio is preferably 12 mol% or less, more preferably 10 mol% or less, further preferably 5 mol% or less and still more preferably 0 mol% from the viewpoint of a decrease in coloration of the polyimide resin (A).

In the production of the polyimide resin (A), the charged amount ratio of the tetracarboxylic acid component and the diamine component is preferably from 0.9 to 1.1 mol of the diamine component per 1 mol of the tetracarboxylic acid component.

In the production of the polyimide resin (A), an end capping agent may be mixed in addition to the tetracarboxylic acid component and the diamine component. The end capping agent is preferably at least one selected from the group consisting of a monoamine compound and a dicarboxylic acid compound. It is sufficient for the amount of the end capping agent used to be an amount in which a desired amount of the end group can be introduced into the polyimide resin (A). This used amount is, based on one mole of the tetracarboxylic acid and/or derivative thereof, preferably from 0.0001 to 0.1 moles, more preferably from 0.001 to 0.06 moles, and further preferably from 0.002 to 0.035 moles.

Among them, monoamine end capping agents are preferable as the end capping agent, and from the viewpoint of introducing the above-described chain aliphatic group having 5 to 14 carbon atoms at an end of the polyimide resin (A) to improve heat aging resistance, a monoamine that has a chain aliphatic group having 5 to 14 carbon atoms is more preferable, and a monoamine that has a saturated linear aliphatic group having 5 to 14 carbon atoms is further preferable.

The end capping agent is particularly preferably at least one selected from the group consisting of n-octylamine, isooctylamine, 2-ethylhexylamine, n-nonylamine, isononylamine, n-decylamine, and isodecylamine, further preferably at least one selected from the group consisting of n-octylamine, isooctylamine, 2-ethylhexylamine, n-nonylamine, and isononylamine, and most preferably at least one selected from the group consisting of n-octylamine, isooctylamine, and 2-ethylhexylamine.

As a polymerization method for producing the polyimide resin (A), a known polymerization method may be applied, and the method described in WO 2016/147996 can be used.

< Component (B) consisting of a resin represented by formula (5) or acid-modified product thereof>

The resin composition of the present invention contains the polyimide resin (A) and a component (B) consisting of a resin represented by the following formula (5) or acid-modified product thereof,

[Formula 14]

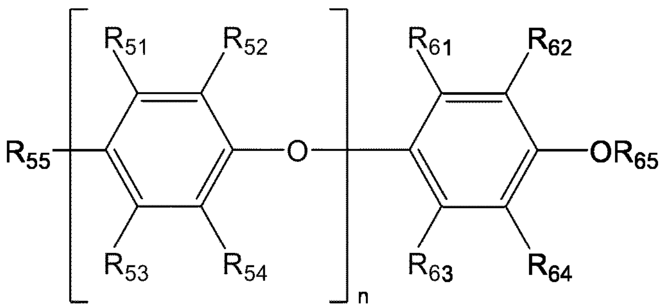

(5)

wherein $R_{51}$ to $R_{55}$ and $R_{61}$ to $R_{64}$ each independently represent a hydrogen atom, a hydroxy group, or an alkyl group having from 1 to 4 carbon atoms, and $R_{65}$ represents a hydrogen atom or an alkyl group having from 1 to 4 carbon atoms; and n denotes the number of repeating structural units, and is a number of 10 or more.

In formula (5), the alkyl group having from 1 to 4 carbon atoms in $R_{51}$ to $R_{55}$ and $R_{61}$ to $R_{65}$ may be either linear or branched, and examples include a methyl group, an ethyl group, an n-propyl group, an isopropyl group, an n-butyl group, an isobutyl group, a sec-butyl group, and a tert-butyl group. Among these, a methyl group, an ethyl group, an n-propyl group, or an isopropyl group is preferred, and a methyl group is more preferred.

In formula (5), $R_{51}$, $R_{53}$, $R_{61}$, and $R_{63}$ are preferably a hydrogen atom or an alkyl group having from 1 to 4 carbon atoms, more preferably a hydrogen atom or a methyl group, and further preferably a hydrogen atom.

$R_{52}$, $R_{54}$, $R_{62}$, and $R_{64}$ are preferably a hydrogen atom or an alkyl group having from 1 to 4 carbon atoms, more preferably a hydrogen atom or a methyl group, and further preferably a methyl group.

$R_{65}$ is preferably a hydrogen atom.

In formula (5), n is a number of 10 or more, and more preferably 20 or more.

The resin represented by the above formula (5) is preferably poly(2,6-dimethyl-1,4-phenylene ether), which is a resin represented by the following formula (5-1),

[Formula 15]

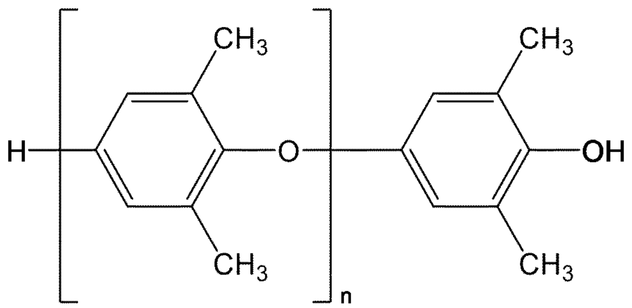

(5-1)

wherein n is as described above.

Examples of an acid-modified product of the resin represented by the above formula (5) include a resin obtained by modifying the resin represented by the above formula (5) with a carboxylic acid or a carboxylic acid derivative. The carboxylic acid or carboxylic acid derivative is preferably an unsaturated carboxylic acid or derivative thereof from the viewpoint of reactivity with the resin represented by the above formula (5).

Examples of the unsaturated carboxylic acid include acrylic acid, methacrylic acid, maleic acid, fumaric acid, itaconic acid, crotonic acid, citraconic acid, sorbic acid, mesaconic acid, and angelic acid. Further, examples of the derivative of the unsaturated carboxylic acid include an acid anhydride, an ester, an amide, an imide, a metal salt, and the like, and among these, an acid anhydride is preferred.

Among the above, the acid-modified product of the resin represented by the above formula (5) is, from the viewpoint of exhibiting high flame resistance and availability, preferably a resin obtained by modifying the resin represented by the above formula (5) with maleic acid or a maleic acid derivative (a maleic acid-modified product of the resin represented by the above formula (5)), and more preferably a resin obtained by modifying the resin represented by the above formula (5) with maleic anhydride.

Examples of the maleic acid-modified product of the resin represented by the above formula (5) include resins having a structure represented by the following formula (5-2) and/or the following formula (5-3),

[Formula 16]

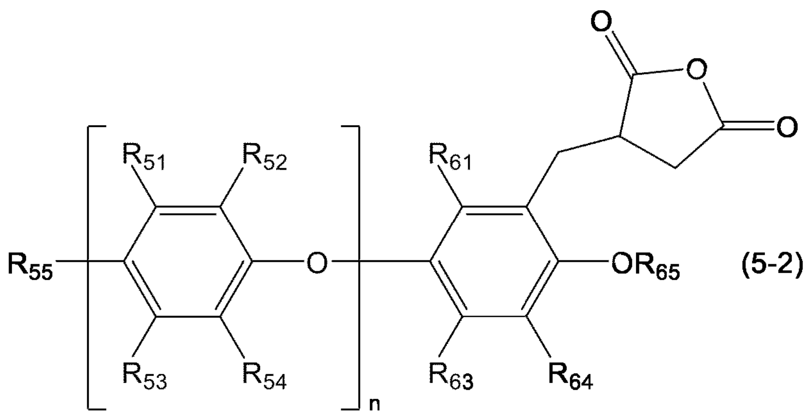

(5-2)

[Formula 17]

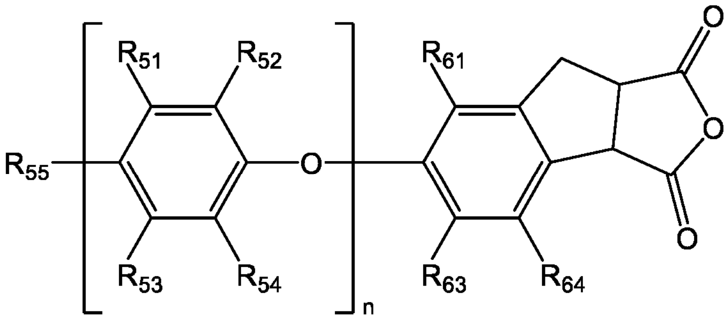

(5-3)

wherein $R_{51}$ to $R_{55}$, $R_{61}$, $R_{63}$, $R_{64}$, $R_{65}$, and n are the same as described above.

An acid modification rate of the acid-modified product of the resin represented by the above formula (5) is, from the viewpoint of obtaining low dielectric properties, improving film formability, and availability, preferably 0.01 to 5.0% by mass, more preferably 0.05 to 3.0% by mass, further preferably 0.1 to 2.0% by mass, and still further preferably 0.2 to 1.0% by mass. As used herein, "acid modification rate" refers to the content (% by mass) of structures derived from the acid in the acid-modified product. For example, when the acid-modified product of the resin represented by the above formula (5) is a resin obtained by modifying the resin represented by the above formula (5) with maleic anhydride, the acid modification rate means the content (% by mass) of structures derived from maleic anhydride in the acid-modified product.

From the viewpoint of exhibiting high flame resistance and availability, the component (B) is preferably a resin represented by the above formula (5) or a maleic acid-modified product thereof, more preferably a resin represented by the above formula (5), and further preferably poly(2,6-dimethyl-1,4-phenylene ether), which is a resin represented by the above formula (5-1).

From the viewpoint of exhibiting high flame resistance and improving molding processability, the component (B) preferably has an intrinsic viscosity of 0.20 to 0.60 dL/g at 30°C measured in chloroform, more preferably 0.30 to 0.50 dL/g, and further preferably 0.30 to 0.45 dL/g.

As the resin represented by the above formula (5), commercially available products such as "PX100F" manufactured by Polyxylenol Singapore Ltd. (poly(2,6-dimethyl-1,4-phenylene ether), Tg = 207°C, intrinsic viscosity at 30°C measured in chloroform = 0.37 dL/g), and "PX100L" (poly(2,6-dimethyl-1,4-phenylene ether), Tg = 210°C, intrinsic viscosity at 30°C measured in chloroform = 0.47dL/g) can also be used.

Examples of a commercially available resin (maleic acid-modified product) obtained by modifying the resin represented by the above formula (5) with maleic anhydride include "Iupiace PME-80" manufactured by Mitsubishi Engineering-Plastics Co., Ltd. (maleic anhydride modification rate: 0.38% by mass), and the like.

<Content>

The proportion [(B)/{(A)+(B)}] of the content by mass of the component (B) with respect to the total content by mass of the component (A) and the component (B) in the resin composition is, from the viewpoint of exhibiting high flame resistance and obtaining low dielectric properties, more than 0.50, preferably 0.60 or more, more preferably 0.65 or more, further preferably 0.70 or more, still further preferably 0.75 or more, and still further preferably 0.80 or more. In addition, the upper limit is less than 1.00, and from the viewpoint of exhibiting high flame resistance, the upper limit is preferably 0.99 or less, more preferably 0.98 or less, and further preferably 0.95 or less.

The content of the component (A) in the resin composition is not particularly limited as long as the content is in a range in which the above-described [(B)/{(A)+(B)}] is more than 0.50. However, from the viewpoint of exhibiting high flame resistance and obtaining low dielectric properties, the content is preferably 1 to 45% by mass, more preferably 2 to 40% by mass, further preferably 5 to 30% by mass, and still further preferably 5 to 25% by mass.

The content of the component (B) in the resin composition is not particularly limited as long as the content is in a range in which the above-described [(B)/{(A)+(B)}] is more than 0.50. However, from the viewpoint of exhibiting high flame resistance and obtaining low dielectric properties, the content is preferably 30 to 99.5% by mass, more preferably 40 to 99.5% by mass, further preferably 50 to 99.5% by mass, still further preferably 60 to 98% by mass, still further preferably 70 to 95% by mass, and still further preferably 75 to 95% by mass.

<Additives>

The resin composition of the present invention may contain additives as required, such as a filler, reinforcement

fiber, a delusterant, a plasticizer, an antistatic agent, an anti-coloring agent, an anti-gelling agent, a colorant, a slidability-improving agent, an antioxidant, a conducting agent, a resin-modifying agent, and a compatibilizer.

The amount added of the additive is not particularly limited, but from the viewpoint of exerting the effects of the additive while maintaining the high flame resistance, the content is usually, of the resin composition, 50 % by mass or less, preferably 0.0001 to 30 % by mass, more preferably 0.001 to 15 % by mass, and further preferably 0.01 to 10 % by mass.

Further, resins other than component (A) and component (B) can be blended into the resin composition of the present invention as long as the properties of the thermoplastic resin composition are not impaired. The resin is preferably a thermoplastic resin having high heat resistance, such as a polyamide resin, a polyester resin, a polyimide resin other than the polyimide resin (A), a polycarbonate resin, a polyetherimide resin, a polyamideimide resin, a polyphenylene etherimide resin, a polyphenylene sulfide resin, a polysulfone resin, a polyethersulfone resin, a polyarylate resin, a liquid crystal polymer, a polyether ether ketone resin, a polyether ketone resin, a polyether ketone ketone resin, a polyether ether ketone ketone resin, a polybenzimidazole resin, a fluororesin, and the like. Examples of the fluororesin include polytetrafluoroethylene, a perfluoroalkyl vinyl ether copolymer, a tetrafluoroethylene/ethylene copolymer, polyvinylidene fluoride, polychlorotrifluoroethylene, and the like.

Among these, from the viewpoint of heat resistance, molding processability, strength, and solvent resistance, one or more selected from the group consisting of a polyetherimide resin, a polyphenylene sulfide resin, and a polyether ether ketone resin is preferable, from the viewpoint of low water absorption, a liquid crystal polymer is preferable, and from the viewpoint of obtaining high flame resistance, one or more selected from the group consisting of a polyphenylene sulfide resin, polytetrafluoroethylene, and a perfluoroalkyl vinyl ether copolymer is preferable.

When a resin other than the component (A) and the component (B) is used in combination, there is no particular restriction on the amount added as long as the properties of the resin composition are not impaired.

However, the total content of the component (A) and component (B) in the resin composition of the present invention is preferably 30% by mass or more, more preferably 40% by mass or more, further preferably 50% by mass or more, still further preferably 70% by mass or more, still further preferably 80% by mass or more, still further preferably 90% by mass or more, and still further preferably 95% by mass or more from the viewpoint of obtaining an effect of the present invention, and is 100% by mass or less.

The resin composition of the present invention can exhibit high flame resistance even if the content of flame retardant is small. From this viewpoint, the content of the flame retardant in the resin composition is preferably 5% by mass or less, more preferably 2% by mass or less, further preferably 1% by mass or less, still further preferably 0.5% by mass or less, still further preferably 0.2% by mass or less, still further preferably 0.1% by mass or less, still further preferably 0.05% by mass or less, still further preferably 0.02% by mass or less, still further preferably less than 0.01% by mass, and still further preferably 0% by mass.

Examples of the flame retardant include known flame retardants, such as a halogen-based flame retardant, a phenol-based flame retardant, a phosphorus-based flame retardant, a metal oxide-based flame retardant, a metal hydroxide-based flame retardant, a metal salt-based flame retardant, a nitrogen-based flame retardant, a silicone-based flame retardant, and a boron compound-based flame retardant.

The resin composition of the present invention preferably does not contain a solvent from the viewpoint of forming the resin composition into pellet form. Specifically, the content of the solvent in the resin composition is preferably 5% by mass or less, more preferably 1% by mass or less, and further preferably 0.1% by mass or less.

<Form of resin composition>

The resin composition of the present invention may be in any form, but from the viewpoint of exhibiting high flame resistance and obtaining low dielectric properties by forming a microphase-separated structure described below, the resin composition is preferably obtained by melt-kneading at a temperature exceeding the melting point of the component (A), and more preferably the resin composition is in the form of pellets obtained by melt-kneading at a temperature exceeding the melting point of the component (A). That is, the component (A) in the resin composition of the present invention is preferably subjected to a thermal history, and that resin composition is distinguished from a resin composition containing the component (A) in a powder state.

Since the resin composition of the present invention has thermoplasticity, the resin composition can be formed into pellets by, for example, adding the component (A), the component (B), and the various optional components as necessary together and dry blending the resultant mixture, or, feeding the component (B) and optional components into the extruder from a separate location to that of the component (A), then melt-kneading the mixture in the extruder, extruding a strand, and cutting the strand. Further, by introducing the pellets into various kinds of molding machines and thermoforming by the method described below, molded articles having a desired shape can be easily produced.

In resin compositions containing a flame retardant, bleed-out or thermal decomposition, coloring, whitening, and the like of the flame retardant tends to occur during the pellet production process and thermoforming process, but the resin composition of the present invention has the advantage that these problems do not occur.

From the viewpoint of exhibiting high flame resistance and obtaining low dielectric properties, the pellets composed of the resin composition of the present invention and the molded article obtained by molding the resin composition preferably have a microphase-separated structure. The microphase-separated structure is a micro to nano level phase-separated structure formed by phase separation of the component (A) and the component (B). The microphase-separated structure may be a sea-island structure or a co-continuous structure, but is preferably a sea-island structure. In the sea-island structure, depending on the mass ratio between the component (A) and the component (B) in the pellets, either of those components may form the "sea", but from the viewpoint of obtaining excellent film formability, it is preferable that the component (A) forms the "sea".

Whether or not the pellets or molded article have a microphase-separated structure can be determined by observing the surface or a cross section of the pellets or molded article with a scanning transmission electron microscope (STEM).

[Molded article]

The present invention provides a molded article containing the above-described resin composition. The shape of the molded article is not particularly limited, and examples of the shape include a sheet, a film, a strand, a filament, and the like. These may be intermediate members of an industrial product, or may be a final product.

Since the resin composition of the present invention has thermoplasticity, the molded article of the present invention can be easily produced by thermoforming. Examples of the thermoforming method include injection molding, extrusion molding, inflation molding, blow molding, heat press molding, vacuum molding, pneumatic molding, laser molding, welding, welding, and the like, and molding may be carried out by any molding method that includes a heat melting step.

From the viewpoint of the molding processability of the resin composition, the molded article of the present invention is preferably an injection-molded article. In the case of injection molding the resin composition, the molding can be performed without setting the molding temperature or the mold temperature during molding to a high temperature, and thus injection-molding is preferred. For example, in the injection molding, the molding can be performed with setting the molding temperature to preferably 400°C or lower, and more preferably 360°C or lower, and the mold temperature to preferably 260°C or lower, and more preferably 220°C or lower.

Examples of the method for producing the molded article include drying pellets produced by the above-described method, then introducing the pellets into various kinds of molding machines and thermoforming the pellets to produce a molded article having a desired shape.

<Flame resistance>

The resin composition and molded article of the present invention have high flame resistance. Specifically, the molded article having a thickness of 4 mm has an oxygen index measured in accordance with JIS K 7201:1995 of preferably 28 or more, more preferably 28.5 or more, further preferably 29 or more, still further preferably 30 or more, and still further preferably 32 or more.

As one index of flame resistance, the level of flame resistance can be checked by measuring the oxygen index. The oxygen index represents the oxygen concentration required for combustion to continue, and if the oxygen index exceeds 21, combustion cannot continue in air under normal conditions. Further, it is generally said that high flame resistance is indicated when the oxygen index is 27 or more.

The oxygen index can be specifically measured by the method described in the Examples.

<Low dielectric properties>

The resin composition and molded article of the present invention have low dielectric properties, and can achieve, for example, a dielectric constant of 3.0 or less and a dissipation factor of 0.005 or less at a measurement frequency of 10 GHz. The dielectric constant is preferably 2.90 or less, more preferably 2.85 or less, further preferably 2.70 or less, and still further preferably 2.50 or less. The dissipation factor is preferably 0.004 or less, and more preferably 0.003 or less. The dielectric constant and dissipation factor can be specifically measured by the methods described in the Examples.

<Adhesion>

The resin composition and molded article of the present invention also have good adhesion to metal foils such as a copper foil. Therefore, the resin composition and molded article of the present invention can also be used in metal foil laminates such as a copper clad laminate. The adhesion of the molded article composed of the resin composition of the

present invention to a copper foil can be evaluated by the method described in the Examples.

<Applications>

The resin composition and molded article of the present invention can be applied to applications that require high flame resistance, a low dielectric constant and a low dissipation factor, such as related members of 5G or sixth generation mobile communication system (6G) using the frequency band of 70G to 300 GHz (smartphones, flexible printed circuit boards, metal foil laminates such as copper clad laminates, antennas, antenna boards, etc.), various antennas other than those listed above (microwave antennas, millimeter wave antennas, waveguide slot antennas, horn antennas, lens antennas, printed antennas, triplate antennas, microstrip antennas, patch antennas, etc.), various antenna boards (77 GHz in-vehicle millimeter wave radar antenna boards, terahertz wave radar antenna boards, aircraft radar antenna boards, tracked vehicle antenna boards, WiGig antenna boards, etc.), wire coating materials (low dielectric wire coating materials, etc.), bonding sheets, insulating films, raw materials for carbon-fiber reinforced plastics (CFRP), high-frequency circuit boards, printed wiring boards, chip-on-film (COF) flexible boards, multilayer laminates, LED mounted boards, industrial robot boards, communication boards for household robots, semiconductor device materials, wafers for high-frequency devices, Wi-fi chips, wireless communication devices, transmission lines (coaxial lines, strip lines, microstrip lines, coplanar lines, parallel lines, etc.), bearing coatings, heat insulating shafts, trays, various belts (seamless belts etc.), heat-resistant low-dielectric tapes, heat-resistant low-dielectric tubes, various sensors (touch sensors, etc.), various radars (in-vehicle radars, aerospace radars, etc.), radomes (radar domes), optical communication modules (TOSA/ROSA), 8k-TV cable mobile terminals or digital home appliances (tablet terminals, laptop PCs, flat-screen TVs, retractable TVs, digital cameras, smart glasses, smart watches, etc.), base stations (macro cell base stations, small cell base stations, C-RAN base stations, etc.), drones (commercial drones, long-distance mobile drones, etc.), surveillance cameras, indoor or outdoor servers, artificial satellites, communication equipment for space stations, and the like.

Examples

The present invention will be described in more detail with reference to examples below, but the present invention is not limited thereto. Further, various measurements and evaluations in each of the Production Examples and Examples were carried out in the following manner.

<Infrared spectroscopy (IR measurement)>

The IR measurement of the polyimide resin was performed with "JIR-WINSPEC 50", produced by JEOL, Ltd.

<Logarithmic viscosity $\mu$>

The polyimide resin was dried at from 190 to 200°C for 2 hours, and then 0.100 g of the polyimide resin was dissolved in 20 mL of concentrated sulfuric acid (96%, produced by Kanto Chemical Co., Inc.) to form a polyimide resin solution, and the measurement was made at 30°C with a Cannon-Fenske viscometer using the polyimide resin solution as a measurement sample. The logarithmic viscosity $\mu$ was obtained according to the following expression.

$\mu = \ln[(ts/t_0)/C]$
$t_0$: elapsed time for flowing concentrated sulfuric acid
ts: elapsed time for flowing polyimide resin solution
C: 0.5 g/dL

<Melting point, glass transition temperature, crystallization temperature, heat of melting, and heat of crystallization>

The melting point Tm, glass transition temperature Tg, crystallization temperature Tc, heat of melting Hm, and heat of crystallization Hc of the resin alone used in each example or the resin composition obtained in each example were determined using a differential scanning calorimeter. ("DSC-25" produced by TA Instruments). In the measurement of the crystallization temperature Tc, a resin powder was used as the measurement sample for the polyimide resin, and pellets were used as the measurement sample for the crystalline thermoplastic resin compositions.

The measurement samples were subjected to a thermal history under the following conditions in a nitrogen atmosphere. The condition of the thermal history included the first heating (heating rate: 10°C/min), then cooling (cooling rate: 20 °C/min), and then second heating (heating rate: 10°C/min).

The melting point Tm was determined by reading the peak top value of the endothermic peak observed in the second heating. The glass transition temperature (Tg) was determined by reading the value observed in the second

heating. The crystallization temperature (Tc) was determined by reading the peak top value of the exothermic peak observed in cooling. Regarding Tm, Tg, and Tc, when multiple peaks were observed, the peak top value of each peak was read.

The heat of melting Hm (mJ/mg) was calculated from the area of the heat of melting peak (endothermic peak) near the melting point observed when the measurement sample was heated to a temperature equal to or above the melting point at a heating rate of 10°C/min to melt the measurement sample, then cooled at a cooling rate of 20°C/min, and then again melted by heating at a heating rate of 10°C/min. The heat of crystallization Hc (mJ/mg) was calculated from the area of the crystallization exothermic peak observed when the measurement sample was heated to a temperature equal to or above the melting point at a heating rate of 10°C/min to melt the measurement sample, and then cooled at a cooling rate of 20°C/min.

<Crystallization half-time>

The crystallization half-time of the polyimide resin was measured with a differential scanning calorimeter ("DSC-6220", produced by SII Nanotechnology, Inc.).

The polyimide resin was held at 420°C for 10 minutes in a nitrogen atmosphere so as to completely melt, then quenched at a cooling rate of 70°C/min, and the time required from the appearance of the observed crystallization peak to the peak top thereof was calculated.

In Table 1, cases where the crystallization half-time was 20 seconds or less are indicated as "<20".

<Weight average molecular weight >

The weight average molecular weight (Mw) of the polyimide resin was measured with a gel permeation chromatography (GPC) measurement apparatus "Shodex GPC-101" produced by Showa Denko K.K. under the following conditions.

Column: Shodex HFIP-806M
Mobile phase solvent: Hexafluoroisopropanol (HFIP) containing 2 mM sodium trifluoroacetate
Column temperature: 40°C
Flow rate of mobile phase: 1.0 mL/min
Specimen concentration: about 0.1 % by mass
Detector: IR detector
Amount of injection: 100 μm
Calibration curve: standard PMMA

<Heat deformation temperature (HDT)>

An injection-molded article of 80 mm × 10 mm × 4 mm thickness was produced by each method described below using the resin used in each example alone or the resin composition obtained in each example, and the produced molded article was used for measurement.

For the measurement, a flatwise test was performed in accordance with JIS K7191-1, 2: 2015. Specifically, the heat deformation temperature was measured at distance between fulcrums of 64 mm, a load of 1.80 MPa, and a heating rate of 120°C/hour using an HDT test instrument "Auto-HDT3D-2" (produced by Toyo Seiki Seisaku-Sho, Ltd.).

<Dielectric constant, dissipation factor>

An injection-molded article having a thickness of 1.5 mm was produced by the method described below using the resin used in each example alone or pellets of the resin composition obtained in each example. The produced injection-molded article was cut to produce a test piece of 60 mm × 1.5 mm × 1.5 mm thickness, which was used for measurement. The dielectric constant and the dissipation factor were measured using a "PNA Network Analyzer N5222B" manufactured by Keysight Technology Co., Ltd. and a cavity resonator "CP531" manufactured by Kanto Electronics Application & Development Inc. by the cavity resonator perturbation method in accordance with IEC 62810 at a temperature of 23°C, humidity of 50%, and a measurement frequency of 10 GHz. The measured value was the average value of n=2. The test piece was conditioned at a temperature of 23°C and a humidity of 50% for 24 hours or more, and then immediately used for measurement.

<Oxygen index>

An injection-molded article of 80 mm × 10 mm × 4 mm thickness was produced by the method described below using the resin composition produced in each example. Using this molded article as a test piece, the oxygen index was measured using a candle combustion tester D-type (manufactured by Toyo Seiki Seisaku-sho, Ltd.) by a method in accordance with JIS K 7201:1995.

Production Example 1 (production of polyimide resin 1)

500 g of 2-(2-methoxyethoxy)ethanol (produced by Nippon Nyukazai Co., Ltd.) and 218.12 g (1.00 mol) of pyromellitic dianhydride (produced by Mitsubishi Gas Chemical Company, Inc.) were introduced in a 2 L separable flask equipped with a Dean-Stark apparatus, a Liebig condenser tube, a thermocouple, and a four-paddle blade. After creation of a nitrogen flow, the mixture was agitated at 150 rpm so as to become a homogeneous suspended solution. On the other hand, 49.79 g (0.35 mol) of 1,3-bis(aminomethyl)cyclohexane (produced by Mitsubishi Gas Chemical Company, Inc., cis/trans ratio = 7/3) and 93.77 g (0.65 mol) of 1,8-octamethylenediamine (produced by Kanto Chemical Co., Inc.) were dissolved in 250 g of 2-(2-methoxyethoxy)ethanol with a 500 mL beaker, thereby preparing a mixed diamine solution. This mixed diamine solution was added into the suspended solution gradually with a plunger pump. Heat was generated due to the drop addition, but the internal temperature was adjusted to be within the range of 40 to 80°C. The dropwise addition of the mixed diamine solution was carried out in a nitrogen flow state over the whole period. The number of rotations of the agitation blade was set to 250 rpm. After the completion of the dropwise addition, 130 g of 2-(2-methoxyethoxy)ethanol and 1.284 g (0.010 mol) of n-octylamine (produced by Kanto Chemical Co., Inc.) as an end capping agent were added thereto, and the mixture was further agitated. At this stage, a pale yellow polyamic acid solution was obtained. Next, the agitation speed was set to 200 rpm, and the polyamic acid solution in the 2 L separable flask was then heated to 190°C. In this heating process, the deposition of a polyimide resin powder and dehydration associated with imidization were confirmed at a solution temperature of from 120 to 140°C. The solution was kept at 190°C for 30 minutes, then allowed to cool to room temperature, and filtered. The obtained polyimide resin powder was washed and filtered with 300 g of 2-(2-methoxyethoxy)ethanol and 300 g of methanol, and then dried in a dryer at 180°C for 10 hours to obtain 317 g of a powder of crystalline thermoplastic polyimide resin 1(hereinafter, also simply referred to as "polyimide resin 1").

The measurement of the IR spectrum of polyimide resin 1 showed the characteristic absorption of an imide ring ν(C=O) observed at 1768 and 1697 ($cm^{-1}$). The logarithmic viscosity was 1.30 dL/g, Tm was 323°C, Tg was 184°C, Tc was 266°C, the heat of melting was 26.7 mJ/mg, the heat of crystallization was 30.0 mJ/mg, the half-crystallization time was 20 seconds or less, and Mw was 55,000.

Production Example 2 (production of polyimide resin 2)

769 g of 2-(2-methoxyethoxy)ethanol (produced by Nippon Nyukazai Co., Ltd.) and 174.50 g (0.80 mol) of pyromellitic dianhydride (produced by Mitsubishi Gas Chemical Company, Inc.) were introduced in a 2 L separable flask equipped with a Dean-Stark apparatus, a Liebig condenser tube, a thermocouple, and a four-paddle blade. After creation of a nitrogen flow, the mixture was agitated at 150 rpm so as to become a homogeneous suspended solution. On the other hand, 22.76 g (0.16 mol) of 1,3-bis(aminomethyl)cyclohexane (produced by Mitsubishi Gas Chemical Company, Inc., cis/trans ratio = 7/3) and 92.33 g (0.64 mol) of 1,8-octamethylenediamine (produced by Kanto Chemical Co., Inc.) were dissolved in 250 g of 2-(2-methoxyethoxy)ethanol with a 500 mL beaker, thereby preparing a mixed diamine solution. This mixed diamine solution was added gradually with a plunger pump. Heat was generated due to the drop addition, but the internal temperature was adjusted to be within the range of 40 to 80°C. The dropwise addition of the mixed diamine solution was carried out in a nitrogen flow state over the whole period. The number of rotations of the agitation blade was set to 250 rpm. After the completion of the dropwise addition, 10 g of 2-(2-methoxyethoxy)ethanol and 1.027 g (0.008 mol) of n-octylamine (produced by Kanto Chemical Co., Inc.) as an end capping agent were added thereto, and the mixture was further agitated. At this stage, a pale yellow polyamic acid solution was obtained. Next, the agitation speed was set to 200 rpm, and the polyamic acid solution in the 2 L separable flask was then heated to 185°C. In this heating process, the deposition of a polyimide resin powder and dehydration associated with imidization were confirmed at a solution temperature of from 120 to 140°C. The solution was kept at 185°C for 30 minutes, then allowed to cool to room temperature, and filtered. The obtained polyimide resin powder was washed with 600 g of methanol, filtered, and then dried at 185°C for 10 hours with a drier, thereby providing 256 g of a powder of crystalline thermoplastic polyimide resin 2 (hereinafter, simply referred to as "polyimide resin 2").

Tm was 344°C, Tg was 166°C, Tc was 299°C, the heat of melting was 40 mJ/mg, the heat of crystallization was 35 mJ/mg, and Mw was 36,000 of polyimide resin 2.

The composition and evaluation results of the polyimide resin in Production Examples 1 and 2 are shown in Table 1. The values expressed in mol% of the tetracarboxylic acid component and the diamine component in Table 1 are values

calculated from the charged amount of each component in production of the polyimide resin.

[Table 1]

Table 1

| | | Tetracarboxylic acid component (mol% in total tetracarboxylic acid component) | Diamine component (mol% in total diamine component) | | (1)/((1)+(2)) (mol%)*1 | End capping agent (molar amount with respect to 1 mole of tetracarboxylic acid component) | Tm (°C) | Tg (°C) | Tc (°C) | Heat of melting Hm (mJ/mg) | Heat of crystallization Hc (mJ/mg) | Half-crystallization time (sec) | Mw |
|---|---|---|---|---|---|---|---|---|---|---|---|---|---|
| | | PMDA | 1,3-BAC | OMDA | | n-OcA | | | | | | | |
| Production Example 1 | Polyimide resin 1 | 100 | 35 | 65 | 35 | 0.01 | 323 | 184 | 266 | 26.7 | 30.0 | <20 | 55,000 |
| Production Example 2 | Polyimide resin 2 | 100 | 20 | 80 | 20 | 0.01 | 344 | 166 | 299 | 39.8 | 35.0 | Not Measured | 36,000 |

*1: Content ratio (mol%) of the repeating structural unit of the formula (1) with respect to the total of the repeating structural unit of the formula (1) and the repeating structural unit of the formula (2) in the polyimide resin

The abbreviations in the table 1 are as follows.

- PMDA; pyromellitic dianhydride
- 1,3-BAC; 1,3-bis(aminomethyl)cyclohexane
- OMDA; 1,8-octamethylenediamine
- n-OcA: n-Octylamine

Example 1

(Production and evaluation of resin composition, molded article)

A powder of the polyimide resin 1 obtained in Production Example 1 and a powder of poly(2,6-dimethyl-1,4-phenylene ether) ("PX100F" manufactured by Polyxylenol Singapore Ltd., Tg = 207°C, intrinsic viscosity at 30°C measured in chloroform = 0.37 dL/g), which is the component (B), were dry-blended in the proportions shown in Table 2, and then melt-kneaded and extruded using a co-rotating twin-screw kneading extruder ("HK-25D" manufactured by Parker Corporation, screw diameter 25 mm, L/D = 41), at a barrel temperature of 330 to 340°C and a screw rotation speed of 120 rpm. The strand extruded from the extruder was air-cooled and then pelletized using a pelletizer ("Fan Cutter FC-Mini-4/N" manufactured by Hoshi Plastics Co., Ltd.). The obtained pellets were dried at 80°C for 12 hours and then used for injection molding.

The injection molding was performed at a barrel temperature of 360°C, a mold temperature of 180°C, and a molding cycle of 72 seconds using an injection-molding machine ("ROBOSHOT $\alpha$-S30iA" produced by Fanuc Corporation), and an injection-molded article having a predetermined shape to be used in the above-described evaluation was produced.

Using the obtained pellets or injection-molded articles, various evaluations were performed based on the methods described above. The results are shown in Table 2.

Example 2 and Comparative Examples 2 to 4

Pellets and injection-molded articles were produced and the various evaluations were performed in the same manner as Example 1, except that the powder of the polyimide resin 1 obtained in Production Example 1 and the powder of poly(2,6-dimethyl-1,4-phenylene ether) "PX100F" were used in the proportions shown in Table 2, and the injection-molding was carried out at a molding cycle in the range of 65 to 72 seconds (Example 2: 73 seconds, Comparative Example 2: 65 seconds, Comparative Example 3: 67 seconds, and Comparative Example 4: 77 seconds). The results are shown in Table 2.

Comparative Example 1

A powder of the polyimide resin 1 obtained in Production Example 1 was melt-kneaded and extruded at a barrel temperature of 360°C and a screw rotation speed of 150 rpm using a Labo Plasto Mill (produced by Toyo Seiki Seisaku-Sho, Ltd.). The strand extruded from the extruder was air cooled, and then pelletized with a pelletizer ("Fan Cutter FC-Mini-4/N", produced by Hoshi Plastic Co., Ltd.). The obtained pellets were dried at 150°C for 12 hours, and then used for injection-molding.

The injection molding was performed at a barrel temperature of 350°C, a mold temperature of 200°C, and a molding cycle of 50 seconds using an injection-molding machine ("ROBOSHOT $\alpha$-S30iA" produced by Fanuc Corporation), and an injection-molded article having a predetermined shape to be used in the above-described evaluation (HDT measurement) was produced.

Using the obtained pellets or injection-molded articles, the various evaluations were performed using the methods described above. The results are shown in Table 2.

[Table 2]

Table 2

| | | | Unit | Comparative Example 1 | Comparative Example 2 | Comparative Example 3 | Example 1 | Example 2 | Comparative Example 4 |
|---|---|---|---|---|---|---|---|---|---|
| Composition | (A) | Polyimide resin 1 | % by mass | 100 | 70 | 50 | 30 | 10 | |
| | (B) | PX100F | % by mass | | 30 | 50 | 70 | 90 | 100 |
| | (B)/{(A)+(B)} | | - | 0.00 | 0.30 | 0.50 | 0.70 | 0.90 | 1.00 |
| Evaluation results | Thermophysical properties | Melting point (Tm) | °C | 323 | 322 | 322 | 323 | 325 | - |
| | | Glass transition temperature (Tg) | °C | 184 | 202 | 206 | 209 | 208 | 207 |
| | | Crystallization temperature (Tc) | °C | 266 | 269 | 251 | 250 | 249 | - |
| | | Heat of melting (Hm) | mJ/mg | 26.7 | 19.1 | 13.2 | 9.3 | 3.6 | - |
| | | Heat of crystallization (Hc) | mJ/mg | 30.0 | 19.8 | 12.8 | 8.0 | 2.8 | - |
| | | HDT (load 1.8 MPa) | °C | 170 | 179 | 183 | 191 | 194 | 195 |
| | Dielectric properties | Dielectric constant (10 Hz) | - | 2.68 | | | | 2.46 | |
| | | Dissipation factor (10 Hz) | - | 0.004 | | | | 0.003 | |
| | Flame resistance | Oxygen index | - | 25.5 | 24.0 | 27.5 | 32.0 | 32.5 | 30.0 |

As shown in Table 2, it can be seen that the molded articles composed of the resin compositions of Examples 1 and 2 have a better oxygen index and higher flame resistance than the molded articles of Comparative Examples 1 to 4.

Comparative Examples 5 and 6 and Examples 3 and 4

Pellets and injection-molded articles were produced and the oxygen index was measured in the same manner as Example 1, except that the polyimide resin 2 obtained in Production Example 2 and the powder of poly(2,6-dimethyl-1,4-phenylene ether) ("PX100L", manufactured by Polyxylenol Singapore Ltd., Tg = 210°C, intrinsic viscosity at 30°C measured in chloroform = 0.47 dL/g), which is the component (B), were used in the proportions shown in Table 3. The results are shown in Table 3.

[Table 3]

Table 3

| | | | Unit | Comparative Example | Comparative Example | Example | Example |
|---|---|---|---|---|---|---|---|
| | | | | 5 | 6 | 3 | 4 |
| Composition | (A) | Polyimide resin 2 | % by mass | 100 | 90 | 30 | 10 |
| | (B) | PX100L | % by mass | | 10 | 70 | 90 |
| | (B)/{(A)+(B)} | | - | 0.00 | 0.10 | 0.70 | 0.90 |
| Evaluation results | Flame resistance | Oxygen index | - | 26.0 | 22.0 | 28.0 | 30.5 |

As shown in Table 3, it can be seen that the molded articles composed of the resin compositions of Examples 3 and 4 have a better oxygen index and higher flame resistance than the molded articles of Comparative Examples 5 and 6.
The details of each component shown in Tables 2 and 3 are as follows.

<Component (A)>

- Polyimide resin 1: Crystalline thermoplastic polyimide resin 1 obtained in Production

Example 1

- Polyimide resin 2: Crystalline thermoplastic polyimide resin 2 obtained in Production

Example 2

<Component (B)>

- PX100F: Poly(2,6-dimethyl-1,4-phenylene ether), "PX100F" manufactured by Polyxylenol Singapore Ltd., Tg = 207°C, intrinsic viscosity at 30°C measured in chloroform = 0.37 dL/g
- PX100L: Poly(2,6-dimethyl-1,4-phenylene ether), "PX100L" manufactured by Polyxylenol Singapore Ltd., Tg = 210°C, intrinsic viscosity at 30°C measured in chloroform = 0.47 dL/g

Further, the morphology of the pellets obtained in Example 1 was confirmed by the following method.

The pellets obtained in Example 1 were cut using an ultramicrotome ("EM UC7" produced by Leica Microsystems) in a direction perpendicular to the machine direction (MD) of the pellets (i.e., so that a TD cross-section was visible) as shown in Fig. 1 to produce an ultra-thin section. In Fig. 1, reference numeral 1 denotes a pellet and reference numeral 2 denotes an ultra-thin section.

This piece was stained in the gas phase of ruthenium tetroxide for 30 minutes, and then subjected to transmission observation using a STEM detector at an acceleration voltage of 30 kV, a column mode of "Normal", an aperture size of 20 μm, a working distance of 3.6 mm, a detection signal of "aSTEM A", and an observation magnification of 10,000 times using a field emission scanning transmission electron microscope (FE-STEM, "Gemini SEM500" produced by ZEISS) (Fig. 2). In the observation image of Fig. 2, dark areas correspond to the stained portion, and bright areas correspond to the non-stained portion. In the observation image, it was determined that the darkly colored portions were composed of the resin (B) that was easily stained by the ruthenium tetroxide.

From Fig. 2, it can be seen that in the pellets obtained in Example 1, the polyimide resin (A) and the resin (B) form a microphase-separated structure (sea-island structure). Further, it is also inferred that the polyimide resin (A) forms the island portion and the resin (B) forms the sea portion.

Example 1A (film production and evaluation, and evaluation of adhesion between film and copper foil)

<Production of film>

Pellets of the resin composition obtained in Example 1 were dried at 150°C for 10 hours, then introduced into a 20 mm-diameter single-screw extruder equipped with a T-die having a width of 150 mm, and melt-kneaded at a resin temperature of 350 to 360°C. The melt-kneaded resin composition was continuously extruded from the T-die of the single-screw extruder, and then cooled with a metal roll, which was a 140°C cooling roll, to obtain a film having a thickness of 70 μm.

Here, the temperature of the 20 mm-diameter single-screw extruder was set at 335 to 340°C, and the temperature of the T-die was set at 335°C.

<Adhesion between film and copper foil>

A 10 cm × 10 cm film 3 produced by the above-described method and a 10 cm × 10 cm × 12 μm thick copper foil 4 (rolled copper foil, "TQ-MS-VSP" manufactured by JX Nippon Mining & Metals Co., Ltd.) were prepared. As shown in Fig. 3(a), the copper foil 4 and the film 3 were placed, in that order, on release paper (material: PTFE) so that the copper foil 4 and the film 3 overlapped by 1 cm (d=1 cm in Fig. 3(a)). Another sheet of release paper was placed thereon, and heat-sealing was performed using a thermal gradient tester (manufactured by Toyo Seiki Seisaku-sho, Ltd., heater: upper side). The heat-sealing conditions were a temperature of 250°C and a pressure of 0.4 MPa (gauge pressure) for 60 seconds.

After heat-sealing, the sheets of release paper were removed and the film was cut in the MD direction shown in Fig. 3(a) to produce a strip-shaped test piece having a width of 1 cm (Fig. 3(b)). The adhesion area between the film 3' and the copper foil 4' in Fig. 3(b) was 1 $cm^2$.

Next, when the obtained test piece was held by the short side of the film 3' and hung so that the long side was parallel to the direction of gravity as shown in Fig. 4, if the lower copper foil 4' did not fall within 30 seconds, adhesion was determined to exist.

<Tensile adhesive strength>

A test piece was produced in the same manner as in the evaluation of "adhesion between film and copper foil" and used for evaluation. The test piece was placed in the gripper of a universal testing machine ("Strograph VG" manufactured by Toyo Seiki Seisaku-sho, Ltd.) with the film on the top and the copper foil on the bottom so that the long side was parallel to the direction of gravity. A tensile shear test was conducted in accordance with JIS K 6849-1994 at a temperature of 23°C, a test range of 200 N, and a testing rate of 5mm/min to determine the tensile adhesive strength ($N/cm^2$).

Example 2A

A film was produced and evaluated in the same manner as in Example 1A, except that the resin composition used for producing the film was changed to the resin composition obtained in Example 2. The results are shown in Table 4.

[Table 4]

Table 4

| | | | Unit | Example 1A | Example 2A |
|---|---|---|---|---|---|
| Composition | (A) | Polyimide resin 1 | % by mass | 30 | 10 |
| | (B) | PX100F | % by mass | 70 | 90 |
| Film thickness | | | μm | 70 | 70 |
| Evaluation results | Adhesion | Adhesion between film and copper foil | - | Yes | Yes |
| | | Tensile adhesive strength (film-copper foil) | $N/cm^2$ | 28.0 | 19.5 |

From Table 4, it can be seen that since the film composed of the resin composition of the present invention has adhesion to a copper foil, the film can also be used for a metal foil laminate such as a copper clad laminate.

Industrial Applicability

The present invention can provide a resin composition and a molded article that can exhibit high flame resistance even when a flame retardant is used in a small amount or is not used.

Reference Signs List

1 pellet
2 ultra-thin piece
3, 3' film
4, 4' copper foil

**Claims**

1. A resin composition comprising a polyimide resin (A) comprising a repeating structural unit represented by the following formula (1) and a repeating structural unit represented by the following formula (2), a content ratio of the repeating structural unit of formula (1) with respect to the total of the repeating structural unit of formula (1) and the repeating structural unit of formula (2) being 20 to 70 mol% and a component (B) consisting of a resin represented by the following formula (5) or acid-modified product thereof, wherein
a proportion [(B)/{(A)+(B)}] of a content by mass of the component (B) with respect to the total content by mass of the component (A) and the component (B) is more than 0.50,

[Formula 1]

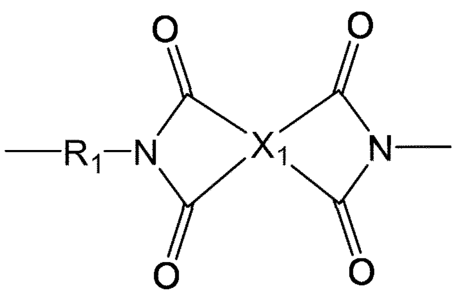

(1)

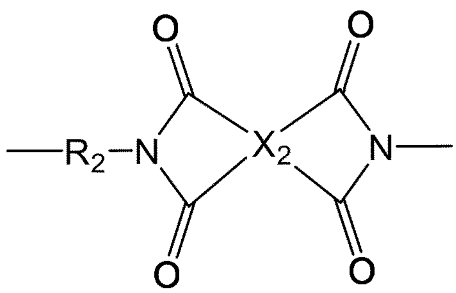

(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring,

[Formula 2]

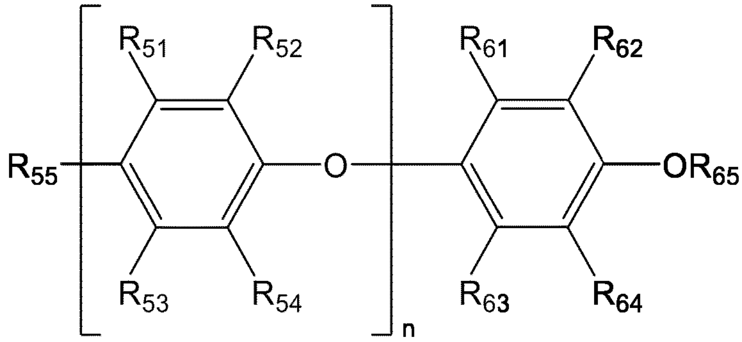

(5)

wherein $R_{51}$ to $R_{55}$ and $R_{61}$ to $R_{64}$ each independently represent a hydrogen atom, a hydroxy group, or an alkyl group having from 1 to 4 carbon atoms, and $R_{65}$ represents a hydrogen atom or an alkyl group having from 1 to 4 carbon atoms; and n denotes the number of repeating structural units, and is a number of 10 or more.

**2.** The resin composition according to claim 1, wherein a total content of the component (A) and the component (B) in the resin composition is 50% by mass or more.

**3.** The resin composition according to claim 1 or 2, wherein the component (B) has an intrinsic viscosity of 0.20 to 0.60 dL/g at 30°C measured in chloroform.

**4.** The resin composition according to any one of claims 1 to 3, wherein the resin composition is obtained by melt-kneading at a temperature exceeding the melting point of the component (A).

**5.** The resin composition according to any one of claims 1 to 4, wherein a pellet composed of the resin composition has a microphase-separated structure.

**6.** A molded article comprising the resin composition according to any one of claims 1 to 5.

**7.** The molded article according to claim 6, wherein the molded article is an injection-molded article.

**8.** The molded article according to claim 6 or 7, wherein the molded article having a thickness of 4 mm has an oxygen index measured in accordance with JIS K 7201:1995 of 28 or more.

[Fig. 1]

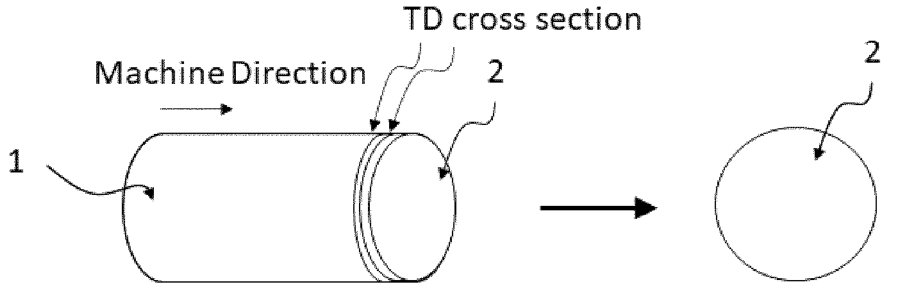


[Fig. 2]

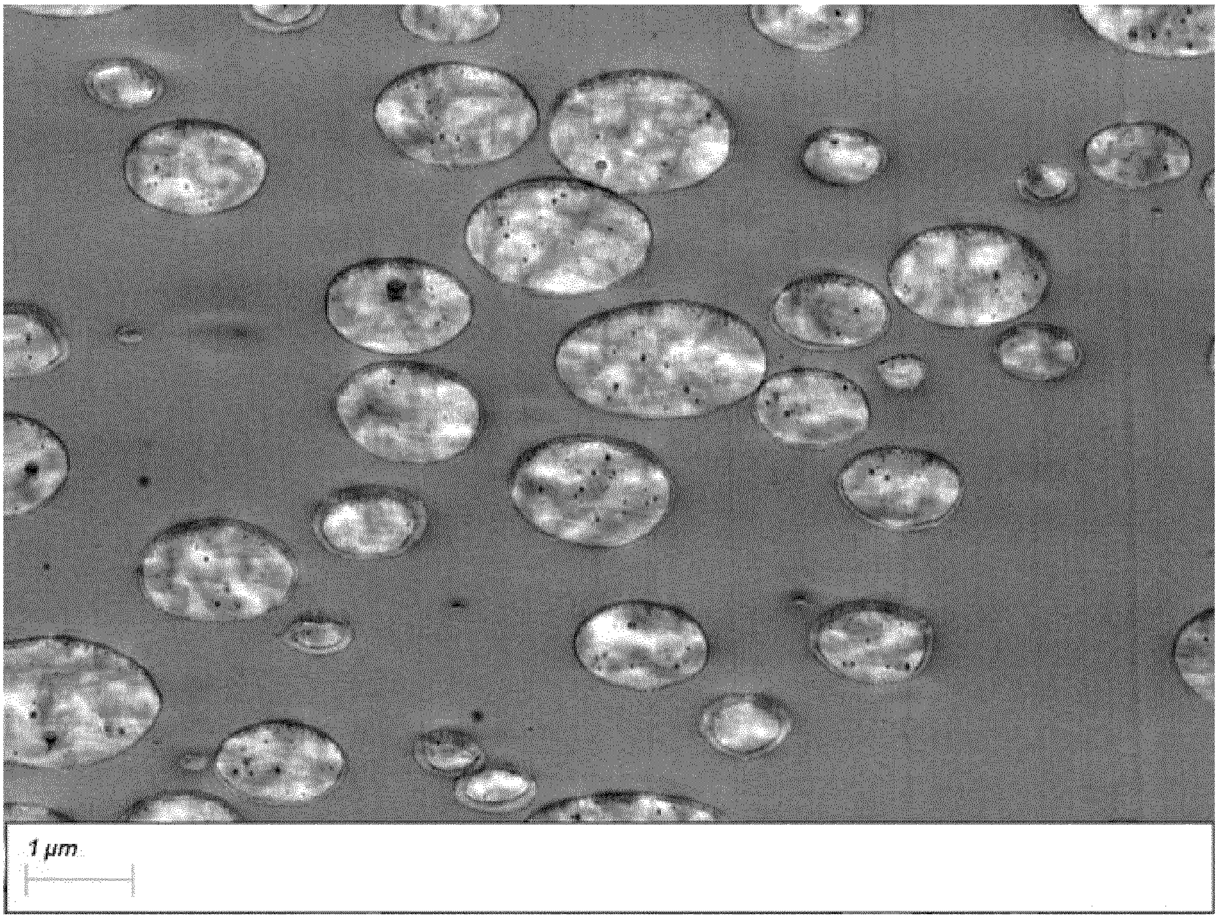

[Fig. 3]

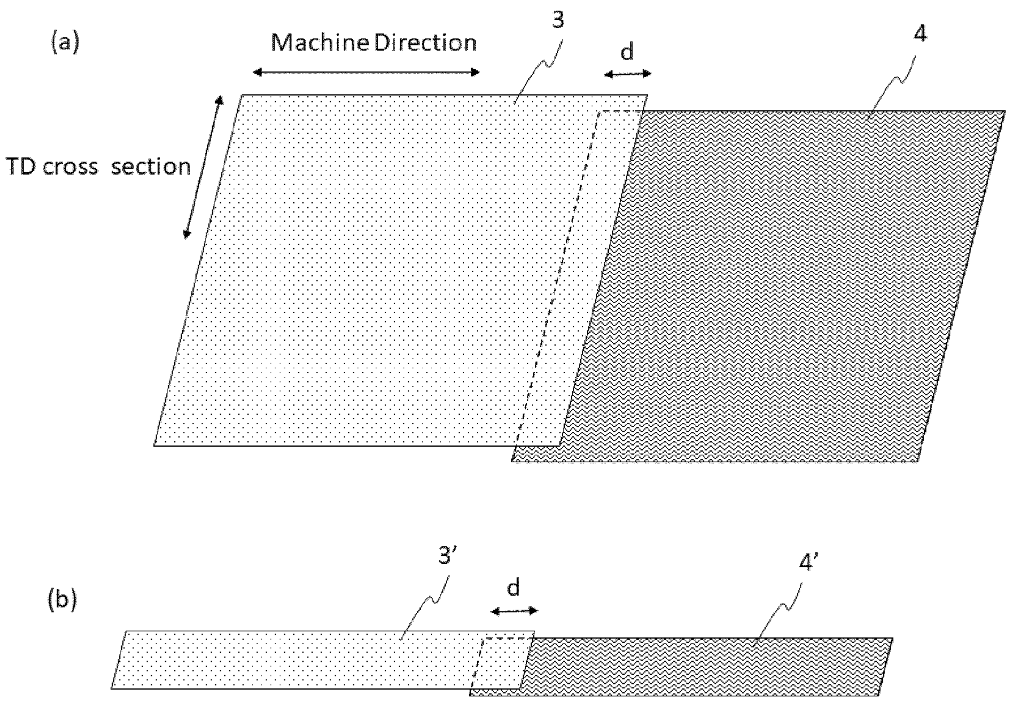


[Fig. 4]

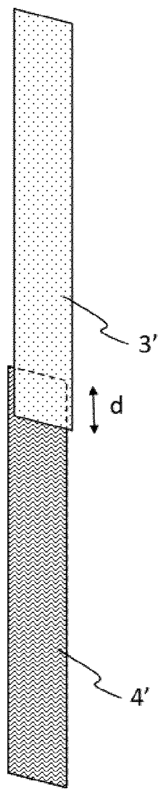

**INTERNATIONAL SEARCH REPORT**

International application No.
**PCT/JP2023/042047**

**A. CLASSIFICATION OF SUBJECT MATTER**

***C08L 71/12***(2006.01)i; ***C08G 73/10***(2006.01)i; ***C08L 79/08***(2006.01)i
FI: C08L71/12; C08L79/08 B; C08G73/10

According to International Patent Classification (IPC) or to both national classification and IPC

**B. FIELDS SEARCHED**

Minimum documentation searched (classification system followed by classification symbols)

C08L71/12; C08G73/10; C08L79/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2021/100716 A1 (MITSUBISHI GAS CHEMICAL COMPANY, INC.) 27 May 2021 (2021-05-27)<br>paragraphs [0064]-[0071], [0079], [0080], [0089], claims, fig. 1 | 1, 2, 5-8<br>3 |
| Y | CN 107903608 A (ZHEJIANG WANMA TAIKE NEW MATERIAL CO., LTD.) 13 April 2018 (2018-04-13)<br>claims, paragraphs [0005]-[0026], examples | 1-8 |
| Y | WO 2015/020020 A1 (MITSUBISHI GAS CHEMICAL COMPANY, INC.) 12 February 2015 (2015-02-12)<br>paragraphs [0028], [0129], [0132]-[0136], examples, claims | 1-8 |
| A | CN 103951962 A (ZHENJIANG YIQING COMPOSITE MATERIAL CO., LTD.) 30 July 2014 (2014-07-30)<br>entire text | 1-8 |
| A | JP 2004-503651 A (GENERAL ELECTRIC COMPANY) 05 February 2004 (2004-02-05)<br>entire text | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 December 2023** | **26 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/042047**

| Patent document cited in search report | Publication date (day/month/year) | Patent family member(s) | Publication date (day/month/year) |
|---|---|---|---|
| WO 2021/100716 A1 | 27 May 2021 | US 2022/0403169 A1<br>fig. 1, paragraphs [0130]-[0149], [0162]-[0166], [0185], claims<br>EP 4063092 A1<br>CN 114729187 A<br>KR 10-2022-0104687 A<br>TW 202128840 A | |
| CN 107903608 A | 13 April 2018 | (Family: none) | |
| WO 2015/020020 A1 | 12 February 2015 | US 2016/0177062 A1<br>paragraphs [0037], [0214], [0226]-[0237], examples, claims<br>EP 3031864 A1<br>CN 105392842 A<br>KR 10-2016-0040183 A<br>TW 201518409 A | |
| CN 103951962 A | 30 July 2014 | (Family: none) | |
| JP 2004-503651 A | 05 February 2004 | US 2003/0125478 A1<br>entire text<br>US 2003/0225221 A1<br>WO 2001/096477 A2<br>EP 1287076 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019220968 A
- WO 2021100716 A
- WO 2016147996 A